(19) Europäisches Patentamt
European Patent Office
Office européen des brevets

(11) EP 4 437 017 B1

(12) EUROPEAN PATENT SPECIFICATION

(45) Date of publication and mention of the grant of the patent:
**24.09.2025 Bulletin 2025/39**

(21) Application number: **21830933.4**

(22) Date of filing: **23.11.2021**

(51) International Patent Classification (IPC):
***C08F 220/04*** *(2006.01)* ***C08F 220/06*** *(2006.01)*
***C08F 220/10*** *(2006.01)* ***C08G 77/16*** *(2006.01)*
***C08L 33/02*** *(2006.01)* ***C08L 83/04*** *(2006.01)*
***C09D 133/02*** *(2006.01)* ***C09D 133/04*** *(2006.01)*

(52) Cooperative Patent Classification (CPC):
(C-Sets available)
**C08G 77/16; C08F 220/06; C08F 220/1804; C08L 33/02; C08L 83/04** (Cont.)

(86) International application number:
**PCT/CN2021/132470**

(87) International publication number:
**WO 2023/092285 (01.06.2023 Gazette 2023/22)**

(54) **AQUEOUS POLYMER COMPOSITION**
WÄSSRIGE POLYMERZUSAMMENSETZUNG
COMPOSITION AQUEUSE DE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2024 Bulletin 2024/40**

(73) Proprietors:
- **Dow Global Technologies LLC**
  **Midland, MI 48674 (US)**
- **Rohm and Haas Company**
  **Collegeville, PA 19426 (US)**

(72) Inventors:
- **ZHANG, Jinyuan**
  **Shanghai 201203 (CN)**
- **LIU, Hui**
  **Shanghai 201203 (CN)**
- **DONG, Xiangting**
  **Shanghai 201203 (CN)**

(74) Representative: **Beck Greener LLP**
**Fulwood House**
**12 Fulwood Place**
**London WC1V 6HR (GB)**

(56) References cited:
**WO-A1-02/00799**
**WO-A1-2010/046370**
**WO-A1-2021/041011**

- **ZHANG ET AL: "A novel approach for the preparation of organic-siloxane oligomers and the creation of hydrophobic surface", APPLIED SURFACE SCIENCE, ELSEVIER, AMSTERDAM, NL, vol. 254, no. 2, 19 October 2007 (2007-10-19), pages 452 - 458, XP022304687, ISSN: 0169-4332, DOI: 10.1016/J.APSUSC.2007.06.030**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 437 017 B1

(52) Cooperative Patent Classification (CPC): (Cont.)

C-Sets
**C08F 220/1804, C08F 220/06, C08F 220/14;**
**C08L 33/02, C08K 5/5415, C08L 83/00;**
**C08L 33/02, C08K 5/5419, C08L 83/00;**
**C08L 83/04, C08L 33/02**

## Description

### FIELD

The present invention relates to an aqueous polymer composition and a process for preparing the same.

### INTRODUCTION

Beading effect (also known as "water repellency") is one of key performance requirements for coating films. Beading effect is coating films' resistance to being wetted by water, resistance to being adhered by water on the coating films, and how easily water drops can roll down from the surface of coating films, just like lotus effect. In interior coating applications, one of commonly used and highly effective additives to repel water is wax, particularly paraffin wax. However, incorporation of paraffin wax into a coating composition significantly hurts dirt pick-up resistance (DPUR) properties when being used in exterior coatings and may also cause other issues like layering or segmentation of the coating composition.

Patent WO 2021/041011 describes a method for preparing an aqueous dispersion of an acrylate-siloxane copolymer particles having an average particle size of 50-500 nm and useful for forming coatings having improved hydrophobicity and stain resistance. The copolymer is prepared by preparing an aqueous monomer emulsion comprising a blend of acrylate monomers, water and surfactants, followed by the addition of an initiator to carry out polymerisation at a temperature in the range of 60-95°C. The acrylate monomers is a blend of acrylate monomers and a siloxane acrylate monomer. The polymeric particles are therefore formed by polymerisation of acrylate monomers in presence of a siloxane monomer comprising acrylate groups.

Zhang et Al. (Applied Surface Science, vol. 254, no. 2, 19-10-2007, pages 452-458) describe a process for the preparation of poly(acrylate-siloxane) copolymers useful to be used in coatings compositions in order to provide hydrophobic polymeric surfaces. The poly(acrylate-siloxane) copolymers are obtained by hydrosilylation reaction of an organopolysiloxane comprising SiH groups along the chain with an acrylate monomer comprising a terminal unsaturated bond. The polysiloxane obtained comprises acrylate groups along the chain (i.e. siloxane oligomers) that are further polymerised with acrylate monomers.

Patent WO 2010/046370 describes a composition for improving water repellency of a substrate, wherein the composition comprises a mixture formed by combining water, one water-repellent silicon-containing compound, a siloxane surfactant containing an alkylpoly(ethyleneoxy)siloxane group and an alkyl siloxane group. The water-repellent silicon-containing compound is a silicone resin, an alkyl alkoxysilane or a polysiloxane. Suitable alkyl alkoxysilanes are hexyltrimethoxysilane of n-octyltriethoxysilane and a preferred polysiloxane is a silanol-terminated polysiloxane.

Finally, patent US 6 323 268 describes a composition for rendering surfaces water repellent, wherein the composition is formed by combining water or a solvent, a methylhydrogensiloxane polymer or copolymer, an alkyl alkoxysilane having an alkyl comprising 1 to 10 carbon atoms and a silicone resin. The composition may further comprise other additives such as a surfactant or a beading agent. A suitable alkyl alkoxysilane may be hexyltrimethoxysilane of n-octyltriethoxysilane.

Therefore, there remains a need for an aqueous polymer composition that is suitable for use in coating applications (particularly, exterior coatings applications) and is capable of providing coatings made therefrom with improved beading effect.

### SUMMARY

The present invention provides a novel aqueous polymer composition by combining polymeric particles comprising an acrylic copolymer and a hydroxyl-terminated polysiloxane, with a specific alkyl silane. A coating composition comprising such aqueous polymer composition can provide coatings made therefrom with surprisingly improved beading effects with beading scores of 6 or more, and preferably 8 or more, as measured according to the test method described in the Examples section below.

In a first aspect, the present invention is an aqueous polymer composition comprising

(a) polymeric particles comprising an acrylic copolymer and a hydroxyl-terminated polysiloxane,
wherein the polymeric particles have an average particle size of from 50 nanometers (nm) to 300 nm, and wherein the hydroxyl-terminated polysiloxane present in the aqueous polymer composition is at a concentration of greater than 3.5% to 9%, by weight based on the weight of the acrylic copolymer; and
(b) from 3% to 12% of an alkyl silane containing at least one alkyl having 5 to 20 carbon atoms by weight based on the weight of the acrylic copolymer.

In a second aspect, the present invention is a process of preparing the aqueous polymer composition of the first

aspect. The process comprises admixing the polymeric particles with the alkyl silane.

In a third aspect, the present invention is a coating composition comprising the aqueous polymer composition of the first aspect.

## DETAILED DESCRIPTION

Products identified by their tradename refer to the compositions available under those tradenames on the priority date of this document. "And/or" means "and, or as an alternative". All ranges include endpoints unless otherwise indicated.

"Aqueous" composition or dispersion herein means that particles dispersed in an aqueous medium. By "aqueous medium" herein is meant water and from 0 to 30%, by weight based on the weight of the medium, of water-miscible compound(s) such as, for example, alcohols, glycols, glycol ethers, glycol esters, or mixtures thereof.

"Structural units", also known as "polymerized units", of the named monomer, refers to the remnant of the monomer after polymerization, that is, polymerized monomer or the monomer in polymerized form. For example, a structural unit of methyl methacrylate is as illustrated:

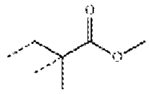

,

where the dotted lines represent the points of attachment of the structural unit to the polymer backbone.

"Glass transition temperature" or "$T_g$" in the present invention can be calculated by using a Fox equation (T.G. Fox, Bull. Am. Physics Soc., Volume 1, Issue No. 3, page 123 (1956)). For example, for calculating the $T_g$ of a copolymer of monomers $M_1$ and $M_2$,

$$\frac{1}{T_g(calc.)} = \frac{w(M_1)}{T_g(M_1)} + \frac{w(M_2)}{T_g(M_2)},$$

wherein $T_g(calc.)$ is the glass transition temperature calculated for the copolymer, $w(M_1)$ is the weight fraction of monomer $M_1$ in the copolymer, $w(M_2)$ is the weight fraction of monomer $M_2$ in the copolymer, $T_g(M_1)$ is the glass transition temperature of the homopolymer of monomer $M_1$, and $T_g(M_2)$ is the glass transition temperature of the homopolymer of monomer $M_2$, all temperatures being in K. The glass transition temperatures of the homopolymers may be found, for example, in "Polymer Handbook", edited by J. Brandrup and E.H. Immergut, Interscience Publishers.

The aqueous polymer composition of the present invention comprises polymeric particles comprising an acrylic copolymer and a hydroxyl-terminated polysiloxane, which are preferably prepared by polymerization, e.g., emulsion polymerization, of monomers used for forming the acrylic copolymer in an aqueous medium, in the presence of one or more hydroxyl-terminated polysiloxanes.

The polymeric particles in the aqueous polymer composition of the present invention comprises one or more acrylic copolymers. "Acrylic copolymer" herein refers to a copolymer of an acrylic monomer with a different acrylic monomer or other ethylenic monomers such as styrene. "Acrylic monomer" as used herein may include, for example, (meth)acrylic acid, alkyl (meth)acrylate, (meth)acrylamide, (meth)acrylonitrile and their modified forms such as hydroxyalkyl (meth)acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

The acrylic copolymer useful in the present invention may comprise structural units of one or more monoethylenically unsaturated ionic monomers. The term "ionic monomer" herein refers to a monomer that bears an ionic charge between pH=1-14. The monoethylenically unsaturated ionic monomers may include, for example, carboxylic acid monomers, phosphorous-containing acid monomers, sulfonic acid monomers, sulfate monomers; salts thereof; or mixtures thereof. The carboxylic acid monomers can be $\alpha$, $\beta$-ethylenically unsaturated carboxylic acids, monomers bearing an acid-forming group which yields or is subsequently convertible to, such an acid group (such as anhydride, (meth)acrylic anhydride, or maleic anhydride); or mixtures thereof. Specific examples of carboxylic acid monomers include acrylic acid, methacrylic acid, maleic acid, itaconic acid, crotonic acid, fumaric acid, or mixtures thereof. The sulfonic acid monomers and salts thereof may include sodium vinyl sulfonate (SVS), sodium styrene sulfonate (SSS), acrylamido-methylpropane sulfonate (AMPS), or mixtures thereof. Suitable phosphorous-containing acid monomers and salts thereof may include, for example, phosphoalkyl (meth)acrylates such as phosphoethyl (meth)acrylate, phosphopropyl (meth)acrylate, phosphobutyl (meth)acrylate, salts thereof, or mixtures thereof; $CH_2=C(R_p)-C(O)-O-(R_qO)_q-P(O)(OH)_2$, wherein $R_p$=H or $CH_3$, $R_q$=alkylene, such as an ethylene group, a propylene group, a butylene group, or a

combination thereof; and q=1-20, such as SIPOMER PAM-100, SIPOMER PAM-200, SIPOMER PAM-300, SIPOMER PAM-600 and SIPOMER PAM-4000 all available from Solvay; phosphoalkoxy (meth)acrylates such as phospho ethylene glycol (meth)acrylate, phospho di-ethylene glycol (meth)acrylate, phospho triethylene glycol (meth)acrylate, phospho propylene glycol (meth)acrylate, phospho di-propylene glycol (meth)acrylate, phospho tri-propylene glycol (meth)acrylate, salts thereof, or mixtures thereof. Preferred phosphorus-containing acid monomer is phosphoethyl methacrylate (PEM). The acrylic copolymer may comprise structural units of the monoethylenically unsaturated ionic monomer at a concentration of zero or more, and can be 0.2% or more, 0.5% or more, 0.8% or more, 1.0% or more, or even 1.2% or more, while at the same time is generally 10% or less, and can be 8% or less, 6% or less, 4.0% or less, 3% or less, 2.5% or less, 2% or less, or even 1.5% or less, by weight based on the weight of the acrylic copolymer.

The acrylic copolymer useful in the present invention may comprise structural units of one or more monoethylenically unsaturated nonionic monomers. The term "nonionic monomer" herein refers to a monomer that does not bear an ionic charge between pH=1-14. Monoethylenically unsaturated nonionic monomers may include $C_1$-$C_{20}$, $C_1$-$C_{10}$, or $C_1$-$C_8$-alkyl esters of (meth)acrylic acid. Examples of suitable monoethylenically unsaturated nonionic monomers include methyl acrylate, methyl methacrylate, ethyl acrylate, butyl acrylate, 2-ethylhexyl acrylate, decyl acrylate, lauryl acrylate, butyl methacrylate, isodecyl methacrylate, lauryl methacrylate, hydroxy-functional alkyl (meth)acrylates such as hydroxyethyl (meth)acrylate and hydroxypropyl (meth)acrylate; (meth)acrylamide; (meth)acrylonitrile; ureido-functional monomers such as hydroxyethyl ethylene urea methacrylate; cycloalkyl (meth)acrylates such as cyclohexyl (meth) acrylate, methcyclohexyl acrylate, isobornyl (meth)acrylate, and dihydrodicyclopentadienyl acrylate; monomers bearing acetoacetate-functional groups such as acetoacetoxyethyl methacrylate (AAEM); monomers bearing carbonyl-containing groups such as diacetone acrylamide (DAAM); vinyl aromatic monomers including styrene and substituted styrene such as .alpha.-methyl styrene, p-methyl styrene, t-butyl styrene, vinyltoluene, or mixtures thereof; vinyltrialkoxysilanes such as vinyltrimethoxysilane, vinyltriethoxysilane, and vinyltris(2-methoxyethoxy)silane, vinyldimethylethoxysilane, and vinylmethyldiethoxysilane; (meth)acryl functional silanes including, for example, (meth)acryloxyalkyltrialkoxysilanes such as gamma-methacryloxypropyltrimethoxysilane and methacryloxypropyltriethoxysilane; 3-methacryloxypropylmethyldimethoxysilane; 3-methacryloxypropyltrimethoxysilane; and 3-methacryloxypropyltriethoxysilane; $\alpha$-olefins such as ethylene, propylene, and 1-decene; vinyl acetate, vinyl butyrate, vinyl versatate and other vinyl esters; glycidyl (meth) acrylate; or combinations thereof. Preferred monoethylenically unsaturated nonionic monomers are butyl acrylate, butyl methacrylate, methyl methacrylate, ethyl acrylate, 2-ethylhexyl acrylate, vinyltrimethoxysilane, styrene, or mixtures thereof. The acrylic copolymer may comprise structural units of the monoethylenically unsaturated nonionic monomer at a concentration of 80% or more, and can be 85% or more, 88% or more, 89% or more, 90% or more, 91% or more, 92% or more, 93% or more, or even 95% or more, while at the same time is generally 99.8% or less, 99.5% or less, 99% or less, 98% or less, 97% or less, 97.5% or less, 96% or less, or even 95% or less, by weight based on the weight of the acrylic copolymer.

The acrylic copolymer useful in the present invention may comprise or be free of structural units of one or more multiethylenically unsaturated monomers including di-, tri-, tetra-, or higher multifunctional ethylenically unsaturated monomers. Suitable multiethylenically unsaturated monomers may include, for example, allyl (meth)acrylate, diallyl phthalate, divinyl benzene, ethylene glycol dimethacrylate, butylene glycol dimethacrylate, or mixtures thereof. The acrylic copolymer may comprise structural units of the multiethylenically unsaturated monomer at a concentration of zero or more, and can be 0.1% or more, 0.2% or more, 0.4% or more, or even 0.5% or more, while at the same time is generally 2.0% or less, 1.8% or less, 1.5% or less, 1.2% or less, 1.0% or less, 0.9% or less, 0.8% or less, 0.6% or less, or even 0.5% or less, by weight based on the weight of the acrylic copolymer.

Total weight concentration of structural units in the acrylic copolymer is equal to 100%, relative to the acrylic polymer weight. Types and levels of the monomers described above may be chosen to provide the acrylic copolymer with a glass transition temperature (Tg) suitable for different applications. The acrylic copolymer may have a Tg of -35 degree Celsius (°C) or more, and can be -30 °C or more, -28 °C or more, -25 °C or more, -22 °C or more, -18 °C or more, -15 °C or more, -10 °C or more, -5 °C or more, 5 °C or more, or even 15 °C or more, while at the same time is generally 25 °C or less, and can be 22 °C or less, 20 °C or less, 18 °C or less, 15 °C or less, 10 °C or less, 5 °C or less, or even 0 °C or less, as calculated by the Fox equation.

The acrylic copolymer useful in the present invention can be a single stage copolymer that is prepared by a single stage polymerization or a multistage copolymer that is prepared by multistage polymerization such as a two-stage copolymer prepared by two-stage polymerization. "Multistage copolymer" herein means a copolymer prepared by the sequential addition of two or more different monomer compositions, comprising at least two polymers including a polymer A and a polymer B. By "polymer A" (also as "first stage polymer") and "polymer B" (also as "the second stage polymer") mean these polymers having different compositions and formed in different stages of multistage free-radical polymerization in preparing the multistage copolymer. Desirably, the acrylic copolymer is a multistage copolymer comprising a polymer A and a polymer B. The polymer A may have a Tg of from -50 °C to 20 °C, from -40 °C to 15 °C, from -30 °C to 10 °C, from -20 °C to 5 °C, or from -15 °C to 0 °C. The polymer B may have a Tg of from 10 °C to 65 °C, from 20 °C to 60 °C, from 30 °C to 55 °C, or from 40 °C to 50 °C. The polymer A and the polymer B in the multistage copolymer may be present at a weight

ratio of the polymer A to polymer B in a range of from 40:60 to 95:5, and can be 40:60 or more, 50:50 or more, or even 60:40 or more, while at the same time is generally 95:5 or less, and can be 90:10 or less, 80:20 or less, 70:30 or less, 60:40 or less, or even 50:50 or less. The multistage copolymer can be a two-stage copolymer, where the total weight concentration of the polymer A and the polymer B in the multistage copolymer is equal to 100%, relative to the multistage polymer weight. The multistage copolymer particles may comprise multiple different phases or layers, which are formed by at least the polymer A and the polymer B.

The polymeric particles in the aqueous polymer composition may have an average particle size of 50 nanometers (nm) or more, and can be 60 nm or more, 70 nm or more, 80 nm or more, 90 nm or more, 100 nm or more, 110 nm or more, 120 nm or more, or even 130 nm or more, while at the same time generally have an average particle size of 300 nm or less, and can be 290 nm or less, 280 nm or less, 260 nm or less, 250 nm or less, 240 nm or less, 220 nm or less, 200 nm or less, 190 nm or less, 180 nm or less, 170 nm or less, 160 nm or less, or even 150 nm or less. The average particle size herein refers to Z-Average particle size and may be measured by a Malvern ZETASIZER Nano S90.

The polymeric particles in the aqueous polymer composition also comprise one or more hydroxyl-terminated polysiloxanes. The hydroxyl-terminated polysiloxanes may comprise two hydroxyl end groups. The hydroxyl-terminated polysiloxane may have the structure represented by formula (I),

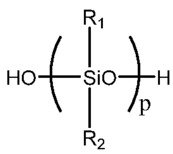

(I)

where p is an integer of from 2 to 100,000, and $R_1$ and $R_2$ may be the same or different and are each independently selected from a substituted or unsubstituted alkyl group having one to 18 carbon atoms, a substituted or unsubstituted alkenyl group having 2 to 14 carbon atoms, a substituted or unsubstituted aryl group having 5 to 14 carbon atoms, a fluorine substituted alkyl group having one to 14 carbon atoms, and a substituted or unsubstituted aralkyl group having 6 to 24 carbon atoms. The value "p" can be 2 or higher, 3 or higher, 4 or higher, 5 or higher, 10 or higher, 15 or higher, or even 20 or higher, while at the same time is generally 100,000 or less, and can be 1,000 or less, 400 or less, 120 or less, 100 or less, 75 or less, or even 50 or less. $R_1$ and $R_2$ groups each independently can be methyl, ethyl, n-propyl, isopropyl, n-butyl, sec-butyl, dodecyl, vinyl, allyl, phenyl, naphthyl, tolyl, 3,3,3-trifluoropropyl, benzyl, or phenylethyl, and preferably, methyl, ethyl, propyl or phenyl. Desirably, $R_1$ and $R_2$ are independently methyl or ethyl, and more desirably, $R_1$ and $R_2$ are both methyl.

Suitable examples of commercially available hydroxyl-terminated polysiloxanes may include, for example, DOWSIL™ PMX-0930 and DOWSIL™ PMX-0156 hydroxyl-terminated polydimethylsiloxanes both available from The Dow Chemical Company (DOWSIL is a trademark of The Dow Chemical Company), or mixtures thereof.

The hydroxyl-terminated polysiloxane useful in the present invention may have a weight average molecular weight of 200 grams per mole (g/mol) or more, and can be 400 g/mol or more, 600 g/mol or more, 800 g/mol or more, or even 1,000 g/mol or more, while at the same time is generally 15,000 g/mol or less, and can be 14,000 g/mol or less, 13,000 g/mol or less, 12,000 g/mol or less, 10,000 g/mol or less, 9,000 g/mol or less, 8,000 g/mol or less, 7,000 g/mol or less, 6,000 g/mol or less, or even 5,000 g/mol or less, as measured by Gel Permeation Chromatography (GPC) (further details provided below under GPC Analysis).

All or a major part of the hydroxyl-terminated polysiloxane in the aqueous polymer composition may be with the polymeric particles (i.e., in or on the polymeric particles), and the rest if any is in the aqueous medium of the aqueous polymer composition. "Hydroxyl-terminated polysiloxane with the polymeric particles" herein refers to the hydroxyl-terminated polysiloxane attached to the surface of the polymeric particles (i.e., on the polymeric particles) or embedded in the polymeric particles. "A major part" refers to more than 50% of total weight of the hydroxyl-terminated polysiloxane. Unless otherwise stated, the weight concentration of hydroxyl-terminated polysiloxane refers to the total weight of the hydroxyl-terminated polysiloxane with the polymeric particles and, if present, in the aqueous medium of the aqueous polymer composition, relative to the weight of the acrylic copolymer. For example, the hydroxyl-terminated polysiloxane may be present at a concentration of greater than 3.5% to 9%, and can be 3.6% or more, 3.8% or more, 4.0% or more, 4.2% or more, 4.5% or more, 4.8% or more, or even 5.0% or more, while at the same time is generally at a concentration of 9% or less, and can be 8.8% or less, 8.5% or less, 8.2% or less, 8% or less, 7.8% or less, 7.5% or less, 7.2% or less, 7% or less, 6.8% or less, 6.5% or less, 6.2% or less, 6% or less, 5.8% or less, 5.5% or less, 5.2% or less, or even 5.0% or less, by weight based on the weight of the acrylic copolymer.

The aqueous polymer composition of the present invention also comprises one or more alkyl silanes having at least one alkyl having 5 to 20 carbon atoms, for example, from 6 to 15 carbon atoms, from 7 to 12 carbon atoms, or from 8 to 10 carbon atoms. The alkyl silane may have the structure of formula (II):

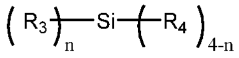 (II)

where $R_3$ is a saturated alkyl group with 5 to 20 carbon atoms, $R_4$ is an alkoxy group with 1 to 3 carbon atoms, and n is an integer from 1 to 3. Preferably, $R_3$ is a saturated alkyl group with 5 carbon atoms or more, 6 carbon atoms or more, 7 carbon atoms or more, or even 8 carbon atoms or more, while at the same time is generally 20 carbon atoms or less, 17 carbon atoms or less, 15 carbon atoms or less, 12 carbon atoms or less, or even 10 carbon atoms or less.

Examples of suitable alkyl silanes include n-Octyltriethoxysilane, n-Hexyltrimethoxysilane, hexadecyltriethoxysilane, n-Octyltrimethoxylsilane, pentyltrimethoxysilane, i-Octyltrimethoxysilane, n-Hexyltriethoxysilane, decyltrimethoxysilane, (2,4,4-Trimethylpentyl)trimethoxysilane, or mixtures thereof. Desirably, the alkyl silane is selected from n-Octyltriethoxysilane, n-Hexyltrimethoxysilane, or mixtures thereof.

The alkyl silane useful in the present invention may be present at a concentration of 3% or more, and can be 3.2% or more, 3.5% or more, 3.8% or more, 4% or more, 4.2% or more, 4.5% or more, 4.8% or more, 5.0% or more, 5.2% or more, 5.5% or more, 5.8% or more, 6% or more, 6.2% or more, 6.5% or more, 6.8% or more, 7.0% or more, or even 7.2% or more, while at the same time is generally 12% or less, and can be 11% or less, 10% or less, 9.8% or less, 9.5% or less, 9.2% or less, 9% or less, 8.8% or less, 8.5% or less, 8.2% or less, 8% or less, 7.8% or less, 7.5% or less, 6.8% or less, 6.2% or less, 5.5% or less, 5.0% or less, 4.5% or less, or even 4.0% or less, by weight based on the weight of the acrylic copolymer.

The aqueous polymer composition of the present invention is typically storage stable, as indicated by no phase separation or visible oil-like droplets floating on the surface after heat aging at 50 °C for 10 days, as determined by visual inspection.

The aqueous polymer composition of the present invention can be prepared by admixing the polymeric particles that comprise the acrylic copolymer and the hydroxyl-terminated polysiloxane with the alkyl silane. For example, the aqueous polymer composition is prepared by mixing an aqueous dispersion of the polymeric particles with the alkyl silane. The polymeric particles may be prepared by free-radical polymerization (preferably, emulsion polymerization) of the above described monomers for forming the acrylic copolymer in an aqueous medium, preferably in the presence of the hydroxyl-terminated polysiloxane. Desirably, the polymeric particles are prepared by emulsion polymerization in the presence of the hydroxyl-terminated polysiloxane. The monomers useful for preparing the acrylic copolymer monomers are described above. Total weight concentration of the monomers for preparing the acrylic copolymer may be equal to 100%, based on the weight of total monomers. The weight concentration of each monomer relative to the total weight of the monomers can be the same as the above described weight concentration of structural units of such monomer in the acrylic copolymer relative to the weight of the acrylic copolymer. The monomers for preparing the acrylic copolymer may be added neat or as an emulsion in water; or added in one or more additions or continuously, linearly or nonlinearly, over the reaction period of preparing the polymeric particles. The hydroxyl-terminated polysiloxane used in an amount of greater than 3.5% to 9%, by weight based on the total weight of the monomers for preparing the acrylic copolymer (i.e., the weight of the acrylic copolymer), may be added prior to, during, and/or after the polymerization of the monomers, or combinations thereof. The hydroxyl-terminated polysiloxane is desirably added prior to and/or during the polymerization, for example, adding into the monomers, or added into a polymer seed (for example, a polystyrene seed) to be shot into a reactor, or dispersed in the monomers. Desirably, the hydroxyl-terminated polysiloxane is mixed with the monomers prior to polymerization of the monomers. The polymeric particles formed after polymerization (such as emulsion polymerization) are typically acrylic copolymer/polydimethylsiloxane hybrid particles. Without being bound by a theory, after polymerization process, all or a major part of the hydroxyl-terminated polysiloxanes are with the polymeric particles (i.e., in or on the polymeric particles), which means the aqueous medium of the aqueous polymer composition comprises less amounts of the hydroxyl-terminated polysiloxane than the polymeric particles.

Temperature suitable for polymerization of the monomers may be lower than 100°C, in a range of from 30 to 95°C, or in a range of from 50 to 92°C. Multistage emulsion polymerization using the monomers described above can be used, which at least two stages are formed sequentially, and usually results in the formation of the multistage copolymer comprising at least two polymer compositions.

Free radical initiators may be used in the polymerization process. The polymerization process may be thermally initiated or redox initiated emulsion polymerization. Examples of suitable free radical initiators include hydrogen peroxide, t-butyl hydroperoxide, cumene hydroperoxide, ammonium and/or alkali metal persulfates, sodium perborate, perphosphoric acid, and salts thereof; potassium permanganate, and ammonium or alkali metal salts of peroxydisulfuric acid. The free radical initiators may be used typically at a level of 0.01 to 3.0% by weight, based on the total weight of the monomers. Redox systems comprising the above described initiators coupled with a suitable reductant may be used in the polymerization process. Examples of suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, acetone bisulfite, glycolic acid, hydroxymethanesulfonic acid, glyoxylic acid hydrate, lactic acid, glyceric acid, malic acid, tartaric acid and salts of the preceding acids. Metal salts of iron, copper, manganese, silver, platinum, vanadium, nickel, chromium, palladium, or cobalt may be used to

catalyze the redox reaction. Chelating agents for the metals may optionally be used.

One or more surfactants may be used in the polymerization process. The surfactant may be added prior to or during the polymerization of the monomers, or combinations thereof. A portion of the surfactant can also be added after the polymerization. These surfactants may include anionic and/or nonionic emulsifiers. The surfactants can be reactive surfactants, e.g., polymerizable surfactants. Examples of suitable surfactants include alkali metal or ammonium salts of alkyl, aryl, or alkylaryl sulfates, sulfonates or phosphates; alkyl sulfonic acids; sulfosuccinate salts; fatty acids; and ethoxylated alcohols or phenols. Preferably, the alkali metal or ammonium salts of alkyl, aryl, or alkylaryl sulfates surfactant are used. The surfactant may be used in an amount of from zero to 10%, from 0.5% to 3%, or from 0.8% to 1.5%, by weight based on the total weight of the monomers.

One or more chain transfer agents may be used in the polymerization process. Examples of suitable chain transfer agents include 3-mercaptopropionic acid, n-dodecyl mercaptan, methyl 3-mercaptopropionate, butyl 3-mercaptopropionate, benzenethiol, azelaic alkyl mercaptan, or mixtures thereof. The chain transfer agent may be used in an effective amount to control the molecular weight of the acrylic copolymer. The chain transfer agent may be used in an amount of from zero to 5%, from 0.05% to 1%, or from 0.1% to 0.3%, by weight based on the total weight of the monomers.

After completing the polymerization process, the obtained aqueous dispersion of polymeric particles may be neutralized by one or more bases to a pH value, for example, at least 7, from 7 to 10, or from 8 to 9, prior to and/or after admixing with the alkyl silane. Examples of suitable bases include ammonia; alkali metal or alkaline earth metal compounds such as sodium hydroxide, potassium hydroxide, calcium hydroxide, zinc oxide, magnesium oxide, sodium carbonate; primary, secondary, and tertiary amines, such as triethyl amine, ethylamine, propylamine, monoisopropylamine, monobutylamine, hexylamine, ethanolamine, diethyl amine, dimethyl amine, di-n-propylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, neopentanediamine, dimethylaminopropylamine, hexamethylenediamine, 4,9-dioxadodecane-1,12-diamine, polyethyleneimine or polyvinylamine; aluminum hydroxide; or mixtures thereof. The obtained aqueous dispersion of polymeric particles can be further mixed with the alkyl silane to give the aqueous polymer composition. The aqueous polymer composition may have a solids content of from 20% to 70% or from 40% to 60%, by weight based on the weight of the aqueous polymer composition.

The aqueous polymer composition of the present invention is useful for use in many applications, for examples, coatings, adhesives, and inks. The aqueous polymer composition can be used as a binder in a coating composition.

The present invention also relates to a coating composition comprising the aqueous polymer composition. The aqueous polymer composition may be present at a centration of 10% or more, 20% or more, or even 30% or more, while at the same time is generally 80% or less, 70% or less, or even 60% or less, by weight based on the weight of the coating composition.

The coating composition of the present invention may comprise or be free of one or more pigments. As used herein, the term "pigment" refers to a particulate inorganic material which is capable of materially contributing to the opacity or hiding capability of a coating. Such materials typically have a refractive index greater than 1.8 and include inorganic pigments and organic pigments. Examples of suitable inorganic pigments include titanium dioxide ($TiO_2$), zinc oxide, zinc sulfide, iron oxide, barium sulfate, barium carbonate, or mixtures thereof. Preferred pigment used in the present invention is $TiO_2$. $TiO_2$ may be also available in concentrated dispersion form. The coating composition may also comprise one or more extenders. The term "extender" refers to a particulate inorganic material having a refractive index of less than or equal to 1.8 and greater than 1.3. Examples of suitable extenders include calcium carbonate, aluminum oxide ($Al_2O_3$), clay, calcium sulfate, aluminosilicate, silicate, zeolite, mica, diatomaceous earth, solid or hollow glass, ceramic bead, and opaque polymers such as ROPAQUE™ Ultra E available from The Dow Chemical Company (ROPAQUE is a trademark of The Dow Chemical Company), or mixtures thereof. The coating composition may have a pigment volume concentration (PVC) of 10% or more, 20% or more, 30% or more, or even 40% or less, while at the same time is generally 90% or less, 70% or less, 60% or less, or even 50% or less. PVC of a coating composition may be determined according to the following equation:

$$\mathrm{PVC\%} = [Volume_{(Pigment + Extender)} / (Volume_{(Pigment + Extender)} + Volume_{(Acrylic\ copolymer)})] \times 100\%$$

The coating composition of the present invention may comprise or be free of one or more coalescents. "Coalescent" herein means a compound that is able to aid dispersed polymer particles to form a homogeneous coating film by reducing the film formation temperature of the polymer. The coalescent typically has a molecular weight less than 410. Examples of suitable coalescents include ethylene glycol ethyl ether, ethylene glycol propyl ether, ethylene glycol butyl ether, ethylene glycol hexyl ether, diethylene glycol methyl ether, diethylene glycol ethyl ether, diethylene glycol butyl ether, diethylene glycol hexyl ether, propylene glycol n-butyl ether, dipropylene glycol n-butyl ether, dipropylene glycol methylene ether, tripropylene glycol methyl ether, propylene glycol phenyl ether, propylene glycol tert-butyl ether, 2,2,4-thimethyl-1,3-pentanediol monoisobutyrate, 2,2,4-trimethyl-1,3-pentanediol diisobutyrate, or mixtures thereof. Commercially available coalescents may include, for example, Texanol ester alcohol, OE-300, and OE-400 coalescents all from Eastman Chemical Company, COASOL coalescent from Chemoxy International, or mixtures thereof. The coalescent may be present at a concentration of from zero to 10.0%, from 0.2% to 5.0%, from 0.4% to 3.0%, from 0.6% to 2.0%, or from 0.8% to 1.5%, by weight based on the weight of the coating composition.

The coating composition of the present invention may further comprise or be free of one or more defoamers. "Defoamers" herein refers to chemical additives that reduce and hinder the formation of foam. Defoamers may be silicone-based defoamers, mineral oil-based defoamers, ethylene oxide/propylene oxide-based defoamers, alkyl polyacrylates, or mixtures thereof. The defoamer may be present at a centration of from zero to 1.0%, from 0.05% to 0.8%, from 0.1% to 0.6%, or from 0.2% to 0.4%, by weight based on the weight of the coating composition.

The coating composition of the present invention may comprise or be free of one or more thickeners (also known as "rheology modifiers"). The thickeners may include polyvinyl alcohol (PVA), clay materials, acid derivatives, acid copolymers, urethane associate thickeners (UAT), polyether urea polyurethanes (PEUPU), polyether polyurethanes (PEPU), or mixtures thereof. Examples of suitable thickeners include alkali swellable emulsions (ASE) such as sodium or ammonium neutralized acrylic acid polymers; hydrophobically modified alkali swellable emulsions (HASE) such as hydrophobically modified acrylic acid copolymers; associative thickeners such as hydrophobically modified ethoxylated urethanes (HEUR); and cellulosic thickeners such as methyl cellulose ethers, hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Preferred thickener is based on HEUR. The thickener may be present at a concentration of from zero to 5%, from 0.1% to 4%, from 0.2% to 4%, or from 0.3% to 3%, by weight based on the weight of the coating composition.

The coating composition of the present invention may comprise or be free of one or more dispersants. The dispersants may include non-ionic, anionic, or cationic dispersants such as polyacids with suitable molecular weight, 2-amino-2-methyl-1-propanol (AMP), dimethyl amino ethanol (DMAE), potassium tripolyphosphate (KTPP), trisodium polyphosphate (TSPP), citric acid and other carboxylic acids. The polyacids used may include homopolymers and copolymers based on polycarboxylic acids (e.g., molecular weight ranging from 1,000 to 50,000 as measured by GPC), including those that have been hydrophobically- or hydrophilically-modified, e.g., polyacrylic acid or polymethacrylic acid or maleic anhydride with various monomers such as styrene, acrylate or methacrylate esters, diisobutylene, and other hydrophilic or hydrophobic comonomers; salts of thereof; or mixtures thereof. The dispersant may be present at a concentration of from zero to 10%, from 0.2% to 5.0%, or from 0.5% to 1.5%, by weight based on the weight of the coating composition.

The coating composition of the present invention may comprise water. The concentration of water may be from 10% to 50%, from 15% to 40%, or from 20% to 30%, by weight based on the weight of the coating composition.

In addition to the components described above, the coating composition of the present invention may further comprise any one or combination of the following additives: neutralizers, surfactants, mildewcides, biocides, colorants, anti-oxidants, leveling agents, adhesion promoters, co-solvents, and grind vehicles. These additives may be present in a combined amount of from zero to 40%, from 0.5% to 30%, from 1.0% to 20%, from 2.0% to 10%, by weight based on the weight of the coating composition.

The coating composition of the present invention may be prepared with techniques known in the coating art. A process for preparing the coating composition may comprise admixing the aqueous polymer composition with other optional components, e.g., pigments and/or extenders as described above. Components in the coating composition may be mixed in any order to provide the coating composition of the present invention. Any of the above-mentioned optional components may also be added to the composition during or prior to the mixing to form the coating composition. When the coating composition comprises pigments and/or extenders, the pigments and/or extenders are preferably mixed with the dispersant to form a slurry of pigments and/or extenders.

The present invention also provides a method of providing a coating on a substrate, comprising: applying the substrate the coating composition, and drying, or allowing to dry, the coating composition to form the coating. The coating composition can provide the coating with good beading effect, as indicated by a beading score of 8 or higher, 9 or higher, or even 10, according to the test method described in the Examples section below.

The coating composition of the present invention can be applied to, and adhered to, various substrates. Examples of suitable substrates include wood, metals, plastics, foams, stones, elastomeric substrates, glass, fabrics, concrete, or cementitious substrates. The coating composition, preferably comprising the pigment, is suitable for various applications such as marine protective coatings, general industrial finishes, metal protective coatings, automotive coatings, traffic paints, Exterior Insulation and Finish Systems (EIFS), wood coatings, coil coatings, plastic coatings, can coatings, architectural coatings, and civil engineering coatings. The coating composition is particularly suitable for architectural coatings. The coating composition can be used as a topcoat or in combination with other coatings to form multi-layer coatings. The coating composition of the present invention can be applied to a substrate by incumbent means

including drawing down, brushing, rolling and spraying. The aqueous coating composition is preferably applied by rolling. After the coating composition of the present invention has been applied to a substrate, the coating composition can dry, or allow to dry, to form a film (this is, coating) at room temperature (23±2 °C) or at an elevated temperature, for example, greater than 25 to 80 °C to form a film (this is, coating).

EXAMPLES

Some embodiments of the invention will now be described in the following Examples, wherein percentages (%) refers to weight percentages (wt%) unless otherwise specified. The following materials are used in the examples:

Sodium dodecyl (Linear) benzene sulfonate (A-19) is available from Stepan.
Sodium lauryl sulfate (SLS) is available from BASF.
Butyl acrylate (BA), 2-Ethylhexyl acrylate (EHA), methyl methacrylate (MMA), methacrylic acid (MAA), allyl methacrylate (ALMA), and ethylene urea ethyl methacrylate (EUEMA) (50% active) are all available from The Dow Chemical Company.
Ammonium persulfate (APS), isoascorbic acid (IAA), ferrous sulfate hydrate ($FeSO_4.7H_2O$), ethylene diamine tetraacetic acid (EDTA), and t-Butyl hydroperoxide (70% active) (t-BHP) are all available from Shanghai Chemical Reagent Co., Ltd.
n-Octyltriethoxysilane, isobutyltrimethoxysilane, n-Hexyltrimethoxysilane, methyltrimethoxysilane, and propylene glycol (PG) are all available from Sinopharm Chemical Company.
DOWSILTM 87, available from The Dow Chemical Company, is a silane/siloxane emulsion blend with ethoxy-silanol reactive groups, which contains two major components: silicic acid, diethoxyoctylsilyl trimethylsilyl ester, and triethoxyoctylsilane (DOWSIL is a trademark of The Dow Chemical Company).
PDMS-1, available from The Dow Chemical Company, is a hydroxyl-terminated polydimethylsiloxane with a weight average molecular weight of 1,800 g/mol.
PDMS-2, available from The Dow Chemical Company, is a hydroxyl-terminated polydimethylsiloxane with a weight average molecular weight of 5,600 g/mol.
AMP-95 (solids: 95%), available from ANGUS Chemical Company, is 2-amino-2-methyl-1-propanol and used as a neutralizer.

The following standard analytical equipment and methods are used in the Examples and in determining the properties and characteristics stated herein:

Beading Effect

Beading effect represents difficulty for water to wet a coating surface. A test coating composition was casted on a Leneta black vinyl chart with a 100 μm film applicator. The obtained panel was dried horizontally in a Constant Temperature Room (CTR) at 25±3 °C for 24 hours. Then the obtained coated panel was kept vertical so that water drops were allowed to flow from the upper to the bottom side of the panel. Beading effect was visually observed and ranked by beading scores as shown in Table 1 below. The beading score of 6 or higher, and preferably, 8 or higher, indicates good beading effect. Otherwise, if the beading score is 5 or lower, it indicates poor beading effect.

Table 1. Ranking standard for beading effect

| Beading Score | Description |
|---|---|
| 10 | No wetting nor adhesion of water droplets observed on the coating surface |
| 8 | Wetting observed by individual small circular or elliptic water droplets observed on the coating surface |
| 6 | Wetting observed by individual large water droplets on the coating surface |
| 5 | Wetting observed by individual large and long elliptic water droplets on the coating surface |
| 4 | Wetting observed along the small discrete track of water on the coating surface |
| 3 | Wetting observed along the long discrete track of water on the coating surface |
| 2 | Wetting observed along the thinner track of water on the coating surface |
| 0 | Wetting observed along the entire track of water on the coating surface |

GPC Analysis

Molecular weights of hydroxyl-terminated polysiloxanes (e.g., PDMS-1 or PDMS-2) were measured by GPC analysis using an Agilent 1200. A sample was dissolved in 30 mL of tetrahydrofuran (THF)/ formic acid (FA) (95:5 volume/volume) with a concentration of 2 mg/mL, stirred for over 1 hour and left overnight, and then filtered through 0.45 μm polytetrafluoroethylene (PTFE) filter prior to the GPC analysis. The GPC analysis was conducted using the following instrumental conditions:
Columns: One PLgel GUARD columns (10 μm, 50x7.5mm) (132#), two Mixed B columns (7.8x300 mm) in tandem (114#,115#); column temperature: 40 °C; mobile phase: THF/FA (5%); flow rate: 1.0 mL/min; injection volume: 100 μL; detector: Agilent Refractive Index detector, 40 °C; and calibration curve: PL Polystyrene I Narrow standards with molecular weights ranging from 2329000 to 580 g/mol, using polynom 3 fitness.

Synthesis of Preform Seed I

A monomer emulsion was prepared by mixing deionized (DI) water (475.0 g), A-19 (19% active, 293.8 g), BA (1046.0 g), MMA (940.0 g), and MAA (26.5 g). A 5-liter stirred reactor was charged with DI water (1570.0 g). After the content of the reactor was heated to 85 °C, A-19 (17.3 g), the monomer emulsion (62.0 g), and a solution of APS (8.5 g APS in 39.8 g DI water) were added sequentially. After 5 minutes (min), the remaining monomer emulsion was added into the reactor over 110 min while maintaining a temperature of 84-86 °C. Then the contents of the reactor were cooled to 70 °C, followed by addition of $FeSO_4.7H_2O$ (0.01 g), t-BHP (70% active, 1.8 g) in water (18.0 g), and IAA (0.88 g) in water (30.0 g) into the reactor in 30 min. The obtained polymer emulsion had particles with an average particle diameter of 100 nm and a solids content of 45.0%.

Synthesis of Preform Seed II

A monomer emulsion was prepared by mixing DI water (575.0 g), A-19 (19% active, 32.8 g), BA (918.0 g), MMA (802.0 g), and MAA (46.0 g). A 5-liter stirred reactor was charged with DI water (1550.0 g). After the contents of the reactor were heated to 85 °C, A-19 (132.9 g), a solution of $Na_2CO_3$ (3.5 g $Na_2CO_3$ in 50.0 g DI water), the monomer emulsion (63.0 g), and a solution of APS (6.5 g APS in 45.0 g DI water) were added sequentially. After 5 min, the remaining monomer emulsion was fed over 130 min while maintaining a temperature of 84-86 °C. Then the contents of the reactor were cooled to 70 °C, followed by addition of $FeSO_4.7H_2O$ (0.01 g), t-BHP (70% active, 1.0 g) in water (18.0 g) and IAA (0.5 g) in water (30.0 g) into the reactor in 30 min. Finally, ammonia as a neutralizer was further added. The obtained polymer emulsion had particles with an average particle diameter of 60 nm and a solids content of 41.0%.

CE-1

A monomer emulsion I (ME-I) was prepared by mixing DI water (300 g), A-19 (19% active, 10.8 g), BA (550 g), EHA (380 g), MMA (400 g), and MAA (20 g). A monomer emulsion II (ME-II) was prepared by mixing DI water (100 g), A-19 (19% active, 3.5 g), BA (100 g), MMA (200 g), MAA (8 g), and ALMA (17 g).
A 5-liter stirred reactor was charged with DI water (560 g). After the content of the reactor was heated to 85 °C, the Preform Seed I (85 g) was added, followed by a rinse of DI water (30 g). Immediately thereafter, a solution of ammonia (2.0 g, 26% active) and APS (3 g) in DI water (30 g) was added. The monomer emulsions ME-I and ME-II were then added to the reactor sequentially over a period of 120 min while maintaining a temperature of 86 °C. After completing addition of the monomer emulsions, the contents of the reactor were cooled to room temperature. During cooling, a mixture of t-BHP (70% active, 0.55 g) in DI water (13 g), and IAA (0.47 g) in DI water (13 g) was added when temperature was at 75 °C. When the reactor temperature reached 65 °C, a solution of ammonia (9.0 g, 26% active) was added to adjust the pH of the obtained polymer dispersion. Then a mixture of t-BHP (70% active, 1.1 g) in DI water (13 g), and IAA (0.47 g) in DI water (13 g) was added when temperature was in a range of 65 °C to 50 °C. The obtained polymer emulsion had polymeric particles with an average particle diameter of 356 nm, a solid content of 55%, and a pH value of 8.70.

CE-2

5.6 wt% of n-Octyltriethoxysilane was added into the polymer emulsion obtained from CE-1 above and stirred for 30 min to give an aqueous polymer composition of CE-2, wt% relative to the weight of the acrylic copolymer in the emulsion.

CE-3

CE-3 was prepared according to the same procedure as CE-1, except PDMS-1 (100% active, 85 g) was added

into the monomer emulsion I. The obtained emulsion of CE-3 had particles with an average particle diameter of 348 nm, a solids content of 55%, and a pH value of 8.70.

CE-4

5.6 wt% of n-Octyltriethoxysilane was added into the polymer emulsion obtained from CE-3 above and stirred for 30 min to give an aqueous polymer composition of CE-4, wt% relative to the weight of the acrylic copolymer in the emulsion.

CE-5

A monomer emulsion I was prepared by mixing DI water (300 g), A-19 (19% active, 70 g), BA (450 g), EHA (380 g), MMA (500 g), and MAA (20 g). A monomer emulsion II was prepared by mixing DI water (100 g), A-19 (19% active, 14 g), BA (100 g), MMA (200 g), MAA (8 g), and ALMA (17 g). A 5-liter stirred reactor was charged with DI water (600 g) and A-19 (19% active, 4.5 g). After the reactor content was heated to 85 °C, the monomer emulsion I (60 g) was added, followed by a rinse of DI water (40 g). Immediately thereafter, a solution of ammonia (2 g) and APS (3 g) in DI water (30 g) was added. The monomer emulsion I and II were then added to the reactor sequentially over a period of 120 min while maintaining a temperature of 86 °C. After completing addition of the monomer mixture, the reactor was cooled to room temperature. During cooling, a mixture of t-BHP (70% active, 0.55 g) in DI water (13 g), and IAA (0.47 g) in DI water (13 g) was added when temperature was at 75 °C. When the reactor temperature reached 65 °C, a solution of ammonia (26% active, 9.0 g) was added to adjust the pH of the obtained polymer dispersion. Then a mixture of t-BHP (70% active, 1.1 g) in DI water (13 g), and IAA (0.47 g) in DI water (13 g) was added when temperature was in a range of from 65 °C to 50 °C. The obtained emulsion of CE-5 had particles with an average particle diameter of 130 nm, a solids content of 51%, and a pH value of 8.30.

CE-6

5.6 wt% of n-Octyltriethoxysilane was added into the polymer emulsion obtained from CE-5 above and stirred for 30 min to give an aqueous polymer composition of CE-6, wt% relative to the weight of the acrylic copolymer in the emulsion.

CE-7

CE-7 was prepared according to the same procedure as CE-5, except PDMS-1 (100%, 85 g) was added into the monomer emulsion I. The obtained emulsion of CE-7 had particles with an average particle diameter of 137 nm, a solids content of 50%, and a pH value of 8.30.

CE-8

5.6 wt% of isobutyltrimethoxysilane was added into the polymer emulsion obtained from CE-7 above and stirred for 30 min to give an aqueous polymer composition of CE-8, wt% relative to the weight of the acrylic copolymer in the emulsion.

IE-A

5.6 wt% of n-Hexyltrimethoxysilane was added into the polymer emulsion obtained from CE-7 above and stirred for 30 min to give an aqueous polymer composition of IE-A, wt% relative to the weight of the acrylic copolymer in the emulsion.

IE-B

5.6 wt% of n-Octyltriethoxysilane was added into the polymer emulsion obtained from CE-7 above based on and stirred for 30 min to give an aqueous polymer composition of IE-B, wt% relative to the weight of the acrylic copolymer in the emulsion.

CE-9

CE-9 was prepared according to the same procedure as CE-7, except PDMS-2 (100%, 85 g) was added into the monomer emulsion I to replace PDMS-1, and the monomer emulsion II was prepared by mixing DI water (100 g), A-19 (19% active, 14 g), BA (100 g), MMA (217 g), and MAA (8 g). The obtained emulsion of CE-9 had particles with an average

particle diameter of 134 nm, a solids content of 50%, and a pH value of 8.30.

IE-C

5.6 wt% of n-Octyltriethoxysilane was added into the polymer emulsion obtained from CE-9 above and stirred for 30 min to give an aqueous polymer composition of IE-C, wt% relative to the weight of the acrylic copolymer in the emulsion.

CE-10

A monomer emulsion was prepared by mixing DI water (440.5 g), SLS (28% active, 15.9 g), BA (1231.9 g), MMA (608.8 g), EUEMA (50% active, 37.6 g) and MAA (18.8 g). A 5-liter stirred reactor was charged with DI water (703.8 g). After the reactor content was heated to 94 °C, SLS (19.0 g) was added, followed by a solution of $Na_2CO_3$ (6.6 g $Na_2CO_3$ in 30.5 g DI water), the monomer emulsion (56.5 g), immediately thereafter, a solution of APS (6.5 g APS in 21.8 g DI water) was added. The monomer emulsion and a solution of APS (1.0 g APS in 412 g DI water) was fed into the reactor over 70 min while maintaining a temperature of 88 °C. After complete feeding, the contents of the reactor were cooled 70 °C, followed by addition of $FeSO_4.7H_2O$ (0.02 g), t-BHP (70% active, 1.3g) in water (18.0 g) and IAA (0.7 g) in water (30.0 g) into the reactor in 30 min. The obtained polymer emulsion had particles with an average particle diameter of 130 nm and a solids content of 50%.

CE-11

10 wt% of n-Octyltriethoxysilane was added into the polymer emulsion obtained from CE-10 above and stirred for 30 min to give an aqueous polymer composition of CE-11, wt% relative to the weight of the acrylic copolymer in the emulsion.

CE-12

3.6 wt% of DOWSIL 87 was added into the polymer emulsion obtained from CE-10 above and stirred for 30 min to give an aqueous polymer composition of CE-12, wt% relative to the weight of the acrylic copolymer in the emulsion.

CE-13

CE-13 was prepared according to the same procedure as CE-10, except PDMS-2 (100%, 93.5 g) was added into the monomer emulsion. The obtained emulsion of CE-13 had particles with an average particle diameter of 129 nm, a solids content of 50.5%, and a pH value of 9.0.

CE-14

2 wt% of n-Octyltriethoxysilane was added into the polymer emulsion obtained from CE-13 above and stirred for 30 min to give an aqueous polymer composition of CE-14, wt% relative to the weight of the acrylic copolymer in the emulsion.

IE-D

4 wt% of n-Octyltriethoxysilane was added into the polymer emulsion obtained from CE-13 above and stirred for 30 min to give an aqueous polymer composition of IE-D, wt% relative to the weight of the acrylic copolymer in the emulsion.

IE-E

5 wt% of n-Octyltriethoxysilane was added into the polymer emulsion obtained from CE-13 above and stirred for 30 min to give an aqueous polymer composition of IE-E, wt% relative to the weight of the acrylic copolymer in the emulsion.

IE-F

7.5 wt% of n-Octyltriethoxysilane was added into CE-13 and stirred for 30 min to give an aqueous polymer composition of IE-F, wt% relative to the weight of the acrylic copolymer in the emulsion.

IE-G

10 wt% of n-Octyltriethoxysilane was added into the polymer emulsion obtained from CE-13 above and stirred for 30 min to give an aqueous polymer composition of IE-G, wt% relative to the weight of the acrylic copolymer in the emulsion.

IE-H

5 wt% of n-Hexyltrimethoxysilane was added into the polymer emulsion obtained from CE-13 above and stirred for 30 min to give an aqueous polymer composition of IE-H, wt% relative to the weight of the acrylic copolymer in the emulsion.

CE-15

5 wt% of isobutyltrimethoxysilane was added into the polymer emulsion obtained from CE-13 above and stirred for 30 min to give an aqueous polymer composition of CE-15, wt% relative to the weight of the acrylic copolymer in the emulsion.

CE-16

5 wt% of methyltrimethoxysilane was added into the polymer emulsion obtained from CE-13 above and stirred for 30 min to give an aqueous polymer composition of CE-16, wt% relative to the weight of the acrylic copolymer in the emulsion.

CE-17

1.08 wt% of n-Octyltriethoxysilane was added into the polymer emulsion obtained from CE-13 above and stirred for 30 min to give an aqueous polymer composition of CE-17, wt% relative to the weight of the acrylic copolymer in the emulsion.

CE-18

CE-18 was prepared according to the same procedure as CE-10, except PDMS-2 (100%, 37.0 g) was added into the monomer emulsion. The obtained polymer emulsion had particles with an average particle diameter of 129 nm, a solids content of 50.8%, and a pH value of 8.7. Then 10 wt% n-Octyltriethoxysilane was added into the emulsion and stirred for 30 min to give an aqueous polymer composition of CE-18, wt% relative to the weight of acrylic copolymer in the emulsion.

CE-19

CE-19 was prepared according to the same procedure as CE-10, except PDMS-2 (100%, 51.7 g) was added into the monomer emulsion. The obtained emulsion of CE-19 had particles with an average particle diameter of 130 nm, a solids content of 50.7%, and a pH value of 8.7.

CE-20

7.5 wt% of n-Octyltriethoxysilane was added into the polymer emulsion obtained from CE-19 above and stirred for 30 min to give an aqueous polymer composition of CE-20, wt% relative to the weight of the acrylic copolymer in the emulsion.

CE-21

CE-21 was prepared according to the same procedure as CE-10, except PDMS-2 (100%, 103.4 g) was added into the monomer emulsion. The obtained emulsion of CE-21 had particles with an average particle diameter of 122 nm, a solids content of 50.7%, and a pH value of 8.6.

IE-I

5 wt% of n-Octyltriethoxysilane was added into the polymer emulsion obtained from CE-21 above and stirred for 30 min to give an aqueous polymer composition of IE-I, wt% relative to the weight of the acrylic copolymer in the emulsion.

CE-22

CE-22 was prepared according to the same procedure as CE-10, except PDMS-2 (100%, 118.2 g) was added into the monomer emulsion. The resulting emulsion of CE-22 had particles with an average particle diameter of 124 nm, a solids content of 50.9%, and a pH value of 8.8.

CE-23

2 wt% of n-Octyltriethoxysilane was added into the polymer emulsion obtained from CE-22 above and stirred for 30 min to give an aqueous polymer composition of CE-23, wt% relative to the weight of the acrylic copolymer in the emulsion.

IE-J

5 wt% of n-Octyltriethoxysilane was added into the polymer emulsion obtained from CE-22 above and stirred for 30 min to give an aqueous polymer composition of IE-J, wt% relative to the weight of the acrylic copolymer in the emulsion.

CE-24

CE-24 was prepared according to the same procedure as CE-10, except PDMS-2 (100%, 187.1 g) was added into the monomer emulsion. The obtained emulsion of CE-24 had particles with an average particle diameter of 127 nm, a solids content of 51.0%, and a pH of 8.9.

CE-25

5 wt% of n-Octyltriethoxysilane was added into the polymer emulsion obtained from CE-24 above and stirred for 30 min to give an aqueous polymer composition of CE-25, wt% relative to the weight of the acrylic copolymer in the emulsion.

IE-K

A monomer emulsion was prepared by mixing DI water (367.5 g), SLS (28% active, 17.5 g), BA (972.2 g), MMA (481.0 g), EUEMA (50% active, 29.7 g), PDMS-2 (100%, 73.9 g) and MAA (14.9 g). A 5-liter stirred reactor was charged with DI water (550.8 g). After the reactor content was heated to 92 °C, a solution of $Na_2CO_3$ (4.5 g $Na_2CO_3$ in 35 g DI water) was added, followed by a solution of APS (5.2 g APS in 37 g DI water), the Preform Seed II (51.5 g) was added. The monomer emulsion and a solution of APS (0.8 APS g in 248 g DI water) was fed into the reactor over 120 min while maintaining a temperature of 86°C. After complete feeding, the contents of the reactor were cooled 70°C, followed by addition of $FeSO_4.7H_2O$ (0.015 g), t-BHP (70% active, 1.0 g) in water (24.0 g) and IAA (0.6 g) in water (26.0 g) into the reactor in 30 min. The obtained polymer emulsion had particles with an average particle diameter of 243 nm, a pH value of 8.7, and a solids content of 51.8%. Finally, 7.5 wt% n-Octyltriethoxysilane was added into the emulsion to give an aqueous polymer composition of IE-K, wt% relative to the weight of the acrylic copolymer in the emulsion.

IE-L

A monomer emulsion was prepared by mixing DI water (347.6 g), SLS (28% active, 12.6 g), BA (601.2 g), MMA (846.0 g), EUEMA (50% active, 29.7 g), PDMS-2 (100%, 73.9 g) and MAA (19.4 g). A 5-liter stirred reactor was charged with DI water (555.8 g). After the reactor content was heated to 92 °C, SLS (28% active, 15.0 g), a solution of $Na_2CO_3$ (5.2 g) in DI water (35 g), followed by addition of the monomer emulsion (44.6 g), then a solution of APS (5.2 g) in DI water (37 g) was added. The remaining monomer emulsion and a solution of APS (0.8 g) in DI water (316 g) was fed into the reactor over 75 min while maintaining a temperature of 88 °C. After complete feeding, the contents of the reactor were cooled to 70°C, followed by addition of $FeSO_4.7H_2O$ (0.015 g), t-BHP (70% active, 1.0 g) in water (18.0 g) and IAA (0.6 g) in water (30.0 g) into the reactor in 30 min. The obtained polymer emulsion had particles with an average particle diameter of 126 nm, a solids content of 50.7%, and a pH value of 8.8. Finally, 5.0 wt% of n-Octyltriethoxysilane was added into the emulsion to give an aqueous polymer composition of IE-L, wt% relative to the weight of the acrylic copolymer in the emulsion.

Paint Formulations

Comp Paint-1 was prepared based on formulation given in Table 2. Firstly, ingredients in the grinding stage were

added sequentially and mixed at a speed of 300 to 400 revolutions per minute (RPM), and after all pigments were added, the mixing speed was adjusted to 800-1,000 RPM to continue grinding for 30 min to get a well dispersed slurry. Then ingredients in the letdown stage were added sequentially into the slurry to obtain the Comp Paint-1.

Other paint samples (Comp Paint-2 to Comp Paint-25 and Paint-A to Paint-L) were prepared according to substantially the same procedure for preparing the Comp Paint-1 above, except for loadings of binders and types of binders (i.e., the as prepared emulsions or aqueous polymer compositions) used for each coating composition as given in Tables 3 and 4. The loading of each binder was determined according to the solids content of each binder, so as to keep the dry weight of the binder the same in each paint formulation.

All the obtained paint formulations had a PVC of 40% and were evaluated for beading effect properties according to the test methods described above and results are given in Tables 3 and 4.

Table 2. Formulation of Comp Paint-1 (40PVC)

| Component | Source | Amount |
|---|---|---|
| *Grind* | | |
| Water | | 110.00 |
| NATROSOL™ 250 HBR hydroxyethyl cellulose | Available from Ashland | 1.20 |
| AMP-95 (solids: 95%), 2-amino-2-methyl-1-propanol as neutralizer | Available from ANGUS Chemical Company | 0.50 |
| Propylene glycol | Available from Sinopharm Chemical Company | 20.00 |
| OROTAN™ CA-2500 dispersant (26.5% solids) | Available from The Dow Chemical Company | 10.47 |
| TRITON™ DF-16 surfactant | Available from The Dow Chemical Company | 1.00 |
| TEGO™ 825 defoamer | Available from Evonik | 0.50 |
| Ti-Pure R-706 titanium dioxide pigment | Available from Chemours Company | 186.70 |
| CC-700 calcium carbonate extender | Available from Guangfu Building Materials Group (China) | 160.00 |
| *Let Down* | | |
| Binder (CE-1) | | 323.50 |
| Texanol coalescent | Available from Eastman | 8.85 |
| TEGO™ 825 defoamer | Available from Evonik Company | 0.60 |
| ACRYSOL™ RM-2020 NPR rheology modifier | Available from The Dow Chemical Company | 9.25 |
| ACRYSOL™ RM-8W rheology modifier | Available from The Dow Chemical Company | 8.55 |
| ROCIMA™363 biocide | Available from DuPont Company | 10.00 |
| Water | | 148.90 |
| *Total* | | *1000.0* |

Table 3. Properties of aqueous polymer composition and paint formulations

| Coatings | Binder Composition and Property* | | | | | CoatingProperty |
|---|---|---|---|---|---|---|
| | Binder | Particle size, nm | Tg, °C | wt% PDMS | wt% Alkyl silane | Beading Score |
| Comp Paint-1 | CE-1 | 356 | -18 | 0 | 0 | 0 |
| Comp Paint-2 | CE-2 | | | 0 | 5.6 wt% n-Octyltriethoxysilane | 0 |
| Comp Paint-3 | CE-3 | 348 | -18 | 5 wt% PDMS-1 | 0 | 2 |
| Comp Paint-4 | CE-4 | | | 5 wt% PDMS-1 | 5.6 wt% n-Octyltriethoxysilane | 2 |

(continued)

| Coatings | Binder Composition and Property* | | | | | CoatingProperty |
|---|---|---|---|---|---|---|
| | Binder | Particle size, nm | Tg, °C | wt% PDMS | wt% Alkyl silane | Beading Score |
| Comp Paint-5 | CE-5 | 130 | -11.7 | 0 | 0 | 1 |
| Comp Paint-6 | CE-6 | | | 0 | 5.6 wt% n-Octyltriethoxysilane | 1 |
| Comp Paint-7 | CE-7 | 137 | -11.7 | 5 wt% PDMS-1 | 0 | 5 |
| Comp Paint-8 | CE-8 | | | 5 wt% PDMS-1 | 5.6 wt% Isobutyltrimethoxysilane | 5 |
| Comp Paint-9 | CE-9 | 134 | -11.7 | 5 wt% PDMS-2 | 0 | 4 |
| Paint-A | IE-A | | | 5 wt% PDMS-1 | 5.6 wt% n-Hexyltrimethoxysilane | 8 |
| Paint-B | IE-B | | | 5 wt% PDMS-1 | 5.6 wt% n-Octyltriethoxysilane | 8 |
| Paint-C | IE-C | | | 5 wt% PDMS-2 | 5.6 wt% n-Octyltriethoxysilane | 9 |
| *In Tables 3 and 4, particle size of polymer particle was measured by a Malvern ZETASIZER Nano S90 Particle Size Analyzer. Tg was calculated by using the Fox equation. wt% of PDMS is based on the weight of acrylic polymer. wt% of alkyl silane is based on the weight of acrylic polymer.* | | | | | | |

As shown in Table 3, CE-1 to CE-4 samples comprising emulsion polymers having particle sizes of around 350 nm all provided coatings with unacceptable beading effect. Samples containing no alkyl silane (CE-7 and CE-9) or isobutyltrimethoxysilane (CE-8) all provided coatings with unacceptable beading effect. CE-6 sample comprising 5.6 wt% n-Octyltriethoxysilane without polysiloxane provided coatings with even worse beading effects than CE-5. Surprisingly, when 5.6 wt% n-Octyltriethoxysilane (IE-B and IE-C) or n-Hexyltrimethoxysilane (IE-A) was added together with 5 wt% polysiloxane, the beading effects of the resultant coatings were acceptable. It indicates the novel combination of a polysiloxane with a specific alkyl silane shows synergistic effects on the beading effect in acrylic emulsion polymers with a relatively low particle size.

Table 4 gives properties of samples containing one-stage emulsion polymers. CE-10 sample containing no polysiloxane or alkyl silane, CE-13 sample with 5 wt% polysiloxane but no alkyl silane (CE-13), and CE-14 sample comprising 2 wt% n-Octyltriethoxysilane all didn't provide coatings with good beading effects. The combinations of polysiloxane with isobutyltrimethoxysilane or methyltrimethoxysilane failed to provide acceptable beading effects (CE-15 and CE-16). CE-11 sample comprising 10 wt% n-Octyltriethoxysilane only (no polysiloxane) failed to provide good beading effect. Surprisingly, the combinations of 5 wt% polysiloxane with a certain amount of n-Octyltriethoxysilane (IE-D to IE-G) or n-Hexyltrimethoxysilane (IE-H) all provided acceptable beading effects. Dry paint films made from samples comprising 10 wt% polysiloxane, even in the presence of the alkyl silane, showed craters (which is not acceptable) and failed to provide good beading effects (CE-24 and CE-25). Samples (CE-18 to CE-20) containing 2.5 wt% and 3.5 wt% polysiloxanes even in the presence of n-Octyltriethoxysilane didn't provide good beading performance. Samples containing zero, 1.08 wt%, and 2 wt% n-Octyltriethoxysilane even with addition of polysiloxane (CE-21, CE-17 and CE-23) didn't provide good beading performance. In contrast, samples (IE-I to IE-L) containing 5 wt% and 7.5 wt% n-Octyltriethoxysilane in the presence of 5 wt% to 8 wt% polysiloxane all showed good beading effect. Moreover, after heat aging at 50 °C for 10 days, all the aqueous polymer compositions of IEs A to L were homogeneous and stable, showing no phase separation or oil-like droplets observed floating on the surface as observed by visual inspection.

Table 4. Properties of aqueous polymer composition and coating compositions

| Coatings | Binder Composition and Property* | | | | | Coating Property |
|---|---|---|---|---|---|---|
| | Binder | Particle size, nm | Tg, °C | wt% PDMS | wt% Alkyl silane | Beading Score |
| Comp Paint-10 | CE-10 | 133 | -16.5 | 0 | 0 | 0.5 |
| Comp Paint-11 | CE-11 | | -16.5 | 0 | 10 wt% n-Octyltriethoxysilane | 3 |
| Comp Paint-12 | CE-12 | | -16.5 | 0 | 3.6 wt% DOWSIL 87 | 3 |
| Comp Paint-13 | CE-13 | 129 | -16.5 | 5 wt% PDMS-2 | 0 | 4 |
| Comp Paint-14 | CE-14 | | -16.5 | 5 wt% PDMS-2 | 2 wt% n-Octyltriethoxysilane | 5 |
| Comp Paint-15 | CE-15 | | -16.5 | 5 wt% PDMS-2 | 5 wt% Isobutyltrimethoxysilane | 5 |
| Comp Paint-16 | CE-16 | | -16.5 | 5 wt% PDMS-2 | 5 wt% Methyltrimethoxysilane | 5 |
| Comp Paint-17 | CE-17 | | -16.5 | 5 wt% PDMS-2 | 1.08 wt% n-Octyltriethoxysilane | 3 |
| Comp Paint-18 | CE-18 | 129 | -16.5 | 2.5 wt% PDMS-2 | 10 wt% n-Octyltriethoxysilane | 3 |
| Comp Paint-19 | CE-19 | 130 | -16.5 | 3.5 wt% PDMS-2 | 0 | 2 |
| Comp Paint-20 | CE-20 | | -16.5 | 3.5 wt% PDMS-2 | 7.5 wt% n-Octyltriethoxysilane | 4 |
| Comp Paint-21 | CE-21 | 122 | -16.5 | 7 wt% PDMS-2 | 0 | 5 |
| Comp Paint-22 | CE-22 | 124 | -16.5 | 8 wt% PDMS-2 | 0 | 5 |
| Comp Paint-23 | CE-23 | | -16.5 | 8 wt% PDMS-2 | 2 wt% n-Octyltriethoxysilane | 3 |
| Comp Paint-24 | CE-24 | 127 | -16.5 | 10 wt% PDMS-2 | 0 | 4 (craters) |
| Comp Paint-25 | CE-25 | | -16.5 | 10 wt% PDMS-2 | 5 wt% n-Octyltriethoxysilane | N/A (craters) |
| Paint-D | IE-D | | -16.5 | 5 wt% PDMS-2 | 4 wt% n-Octyltriethoxysilane | 6 |
| Paint-E | IE-E | | -16.5 | 5 wt% PDMS-2 | 5 wt% n-Octyltriethoxysilane | 8 |
| Paint-F | IE-F | | -16.5 | 5 wt% PDMS-2 | 7.5 wt% n-Octyltriethoxysilane | 9 |
| Paint-G | IE-G | | -16.5 | 5 wt% PDMS-2 | 10 wt% n-Octyltriethoxysilane | 9 |
| Paint-H | IE-H | | -16.5 | 5 wt% PDMS-2 | 5 wt% n-Hexyltrimethoxysilane | 8 |

(continued)

| Coatings | Binder Composition and Property* | | | | | Coating Property |
|---|---|---|---|---|---|---|
| | Binder | Particle size, nm | Tg, °C | wt% PDMS | wt% Alkyl silane | Beading Score |
| Paint-I | IE-I | | -16.5 | 7 wt% PDMS-2 | 5 wt% n-Octyltriethoxysilane | 6 |
| Paint-J | IE-J | | -16.5 | 8 wt% PDMS-2 | 5 wt% n-Octyltriethoxysilane | 7 |
| Paint-K | IE-K | 243 | -16.5 | 5 wt% PDMS-2 | 7.5 wt% n-Octyltriethoxysilane | 8 |
| Paint-L | IE-L | 126 | 19.6 | 5 wt% PDMS-2 | 5 wt% n-Octyltriethoxysilane | 6 |

## Claims

**1.** An aqueous polymer composition comprising:

(a) polymeric particles comprising an acrylic copolymer and a hydroxyl-terminated polysiloxane,

wherein the polymeric particles have an average particle size of from 50 nm to 300 nm, as measured by dynamic light scattering method (DLS), and
wherein the hydroxyl-terminated polysiloxane in the aqueous polymer composition is at a concentration of greater than 3.5% to 9%, by weight based on the weight of the acrylic copolymer; and

(b) from 3% to 12%, by weight based on the weight of the acrylic copolymer, of an alkyl silane containing at least one alkyl having 5 to 20 carbon atoms.

**2.** The aqueous polymer composition of claim 1, wherein the alkyl silane is selected from n-Octyltriethoxysilane, n-Hexyltrimethoxysilane, hexadecyltriethoxysilane, octyltrimethoxylsilane, pentyltrimethoxysilane, i-Octyltrimethoxysilane, n-Hexyltriethoxysilane, decyltrimethoxysilane, (2,4,4-Trimethylpentyl)trimethoxysilane, or mixtures thereof.

**3.** The aqueous polymer composition of claim 1 or 2, wherein the alkyl silane is present at a concentration of from 4% to 10%, by weight based on the weight of the acrylic copolymer.

**4.** The aqueous polymer composition of any one of claims 1-3, wherein the acrylic copolymer has a Tg, as calculated by the Fox equation, of from -35 °C to 25 °C.

**5.** The aqueous polymer composition of any one of claims 1-4, wherein the hydroxyl-terminated polysiloxane has a weight average molecular weight, as measured by Gel Permeation Chromatography (GPC), of 200 to 15,000 g/mol.

**6.** The aqueous polymer composition of any one of claims 1-5, wherein the hydroxyl-terminated polysiloxane is a hydroxyl-terminated polydimethylsiloxane.

**7.** The aqueous polymer composition of any one of claims 1-6, wherein the polymeric particles have an average particle size of from 100 nm to 250 nm.

**8.** The aqueous polymer composition of any one of claims 1-7, wherein the polymeric particles are formed by emulsion polymerization in the presence of the hydroxyl-terminated polysiloxane.

**9.** The aqueous polymer composition of any one of claims 1-8, wherein the hydroxyl-terminated polysiloxane is present at a concentration of from 5% to 8%, by weight based on the weight of the acrylic copolymer.

**10.** A process of preparing the aqueous polymer composition of any one of claims 1-9, comprising admixing the polymeric

particles with the alkyl silane.

**11.** The process of claim 10, wherein the polymeric particles are formed by free-radical polymerization of monomers for forming the acrylic copolymer in an aqueous medium, in the presence of the hydroxyl-terminated polysiloxane.

**12.** A coating composition comprising the aqueous polymer composition of any one of claims 1-9.

**Patentansprüche**

**1.** Wässrige Polymerzusammensetzung, umfassend:

(a) Polymerpartikel, umfassend ein Acrylcopolymer und ein hydroxylterminiertes Polysiloxan,

wobei die Polymerpartikel eine durchschnittliche Partikelgröße von 50 nm bis 300 nm aufweisen, gemessen durch ein Verfahren einer dynamischen Lichtstreuung (DLS) und
wobei das hydroxylterminierte Polysiloxan in der wässrigen Polymerzusammensetzung in einer Konzentration von mehr als 3,5 Gew.-% bis 9 Gew.-%, bezogen auf das Gewicht des Acrylcopolymers, vorliegt; und

(b) von zu 3 Gew.-% bis 12 Gew.-%, bezogen auf das Gewicht des Acrylcopolymers, ein Alkylsilan, das mindestens ein Alkyl enthält, das 5 bis 20 Kohlenstoffatome aufweist.

**2.** Wässrige Polymerzusammensetzung nach Anspruch 1, wobei das Alkylsilan aus n-Octyltriethoxysilan, n-Hexyltrimethoxysilan, Hexadecyltriethoxysilan, Octyltrimethoxysilan, Pentyltrimethoxysilan, i-Octyltrimethoxysilan, n-Hexyltriethoxysilan, Decyltrimethoxysilan, (2,4,4-Trimethylpentyl)trimethoxysilan oder Mischungen davon ausgewählt ist.

**3.** Wässrige Polymerzusammensetzung nach Anspruch 1 oder 2, wobei das Alkylsilan in einer Konzentration von 4 Gew.-% bis 10 Gew.-%, bezogen auf das Gewicht des Acrylcopolymers, vorhanden ist.

**4.** Wässrige Polymerzusammensetzung nach einem der Ansprüche 1 bis 3, wobei das Acrylcopolymer eine Tg, berechnet durch die Fox-Gleichung, von - 35 °C bis 25 °C aufweist.

**5.** Wässrige Polymerzusammensetzung nach einem der Ansprüche 1 bis 4, wobei das hydroxylterminierte Polysiloxan ein gewichtsmittleres Molekulargewicht, gemessen durch Gelpermeationschromatographie (GPC), von 200 bis 15.000 g/mol aufweist.

**6.** Wässrige Polymerzusammensetzung nach einem der Ansprüche 1 bis 5, wobei das hydroxylterminierte Polysiloxan ein hydroxylterminiertes Polydimethylsiloxan ist.

**7.** Wässrige Polymerzusammensetzung nach einem der Ansprüche 1 bis 6, wobei die Polymerpartikel eine durchschnittliche Partikelgröße von 100 nm bis 250 nm aufweisen.

**8.** Wässrige Polymerzusammensetzung nach einem der Ansprüche 1 bis 7, wobei die Polymerpartikel durch Emulsionspolymerisation in der Gegenwart des hydroxylterminierten Polysiloxans ausgebildet werden.

**9.** Wässrige Polymerzusammensetzung nach einem der Ansprüche 1 bis 8, wobei das hydroxylterminierte Polysiloxan in einer Konzentration von 5 Gew.-% bis 8 Gew.-%, bezogen auf das Gewicht des Acrylcopolymers, vorhanden ist.

**10.** Verfahren zum Herstellen der wässrigen Polymerzusammensetzung nach einem der Ansprüche 1 bis 9, umfassend ein Zumischen der Polymerpartikel mit dem Alkylsilan.

**11.** Verfahren nach Anspruch 10, wobei die Polymerpartikel durch radikalische Polymerisation von Monomeren zum Ausbilden des Acrylcopolymers in einem wässrigen Medium in der Gegenwart des hydroxylterminierten Polysiloxans ausgebildet werden.

**12.** Beschichtungszusammensetzung umfassend die wässrige Polymerzusammensetzung nach einem der Ansprüche 1 bis 9.

## Revendications

1. Composition aqueuse de polymère comprenant :

    (a) des particules polymériques comprenant un copolymère acrylique et un polysiloxane à terminaison hydroxyle,

    dans laquelle les particules polymériques ont une taille moyenne de particule allant de 50 nm à 300 nm, telle que mesurée par une méthode de diffusion dynamique de la lumière (DLS), et
    dans laquelle le polysiloxane à terminaison hydroxyle dans la composition aqueuse de polymère est à une concentration supérieure à 3,5 % à 9 %, en poids sur la base du poids du copolymère acrylique ; et

    (b) de 3 % à 12 %, en poids sur la base du poids du copolymère acrylique, d'un alkylsilane contenant au moins un alkyle ayant de 5 à 20 atomes de carbone.

2. Composition aqueuse de polymère selon la revendication 1, dans laquelle l'alkylsilane est choisi parmi n-octyltriéthoxysilane, n-hexyltriméthoxysilane, hexadécyltriéthoxysilane, octyltriméthoxylsilane, pentyltriméthoxysilane, i-octyltriméthoxysilane, n-hexyltriéthoxysilane, décyltriméthoxysilane, (2,4,4-triméthylpentyl)triméthoxysilane, ou mélanges de ceux-ci.

3. Composition aqueuse de polymère selon la revendication 1 ou 2, dans laquelle l'alkylsilane est présent à une concentration allant de 4 % à 10 % en poids sur la base du poids du polymère acrylique.

4. Composition aqueuse de polymère selon l'une quelconque des revendications 1 à 3, dans laquelle le copolymère acrylique a une Tg, telle que calculée par l'équation de Fox, allant de -35 °C à 25 °C.

5. Composition aqueuse de polymère selon l'une quelconque des revendications 1 à 4, dans laquelle le polysiloxane à terminaison hydroxyle a une masse moléculaire moyenne en poids, telle que mesurée par chromatographie par perméation de gel (GPC), de 200 à 15 000 g/mol.

6. Composition aqueuse de polymère selon l'une quelconque des revendications 1 à 5, dans laquelle le polysiloxane à terminaison hydroxyle est un polydiméthylsiloxane à terminaison hydroxyle.

7. Composition aqueuse de polymère selon l'une quelconque des revendications 1 à 6, dans laquelle les particules polymériques ont une taille moyenne de particule allant de 100 nm et 250 nm.

8. Composition aqueuse de polymère selon l'une quelconque des revendications 1 à 7, dans laquelle les particules polymériques sont formées par polymérisation en émulsion en présence du polysiloxane à terminaison hydroxyle.

9. Composition aqueuse de polymère selon l'une quelconque des revendications 1 à 8, dans laquelle le polysiloxane à terminaison hydroxyle est présent à une concentration allant de 5 % à 8 %, en poids sur la base du poids du polymère acrylique.

10. Procédé de préparation de la composition aqueuse de polymère selon l'une quelconque des revendications 1 à 9, comprenant le mélange des particules polymériques avec l'alkylsilane.

11. Procédé selon la revendication 10, dans lequel les particules polymériques sont formées par polymérisation radicalaire de monomères permettant de former le copolymère acrylique dans un milieu aqueux, en présence du polysiloxane à terminaison hydroxyle.

12. Composition de revêtement comprenant la composition aqueuse de polymère selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2021041011 A
- WO 2010046370 A
- US 6323268 B

### Non-patent literature cited in the description

- **ZHANG et al.** *Applied Surface Science*, 19 October 2007, vol. 254 (2), 452-458
- **T.G. FOX**. *Bull. Am. Physics Soc.*, 1956, vol. 1 (3), 123
- Polymer Handbook. Interscience Publishers